# EUROPEAN PATENT APPLICATION

(11) **EP 2 793 142 A2**
(43) Date of publication of application: **22.10.2014**
(21) Application number: 14161385.1
(22) Date of filing: 25.03.2014
(51) Int. Cl.: G06F 15/78, G06F 1/32

(54) **Microcomputer and storing apparatus**

(30) Priority: 17.04.2013 JP 2013086327
(71) Applicant: CASIO COMPUTER CO., LTD., Shibuya-ku, Tokyo 151-8543 (JP)
(72) Inventor: Nishimoto, Masateru, Hamura-shi, Tokyo 205-8555 (JP)
(74) Representative: Grünecker, Kinkeldey, Stockmair & Schwanhäusser

(57) **Abstract**

In a microcomputer provided with a program storing device for storing instruction codes and a micro-processor for reading and executing the instruction codes stored in the program storing device, the program storing device have plural memories for storing instruction codes, an output unit for receiving plural pieces of data output from the plural memories, and selecting and outputs one of the plural pieces of data received from the plural memories, a selecting unit for receiving address data sent from the micro-processor to select one of the plural memories, an activating unit for activating the memory selected by the selecting unit, and a controlling unit for controlling the output unit to output data of the memory activated by the activating unit.

## Description

### CROSS-REFERENCE TO RELATED APPLICATION

The present application is based upon and claims the benefit of priority from the prior Japanese Patent Application No. 2013-086327, filed April 17, 2013, the entire contents of which are incorporated herein by reference.

### BACKGROUND OF THE INVENTION

### 1. Field of the Invention

The present invention relates to a microcomputer and a storing apparatus.

### 2. Description of the Related Art

In conventional microcomputers, a micro-processor reads instruction codes from a program memory which store a program or the instruction codes, and executes the instruction codes. For example, refer to Japanese Unexamined Patent Publication No. Hei5-265754.

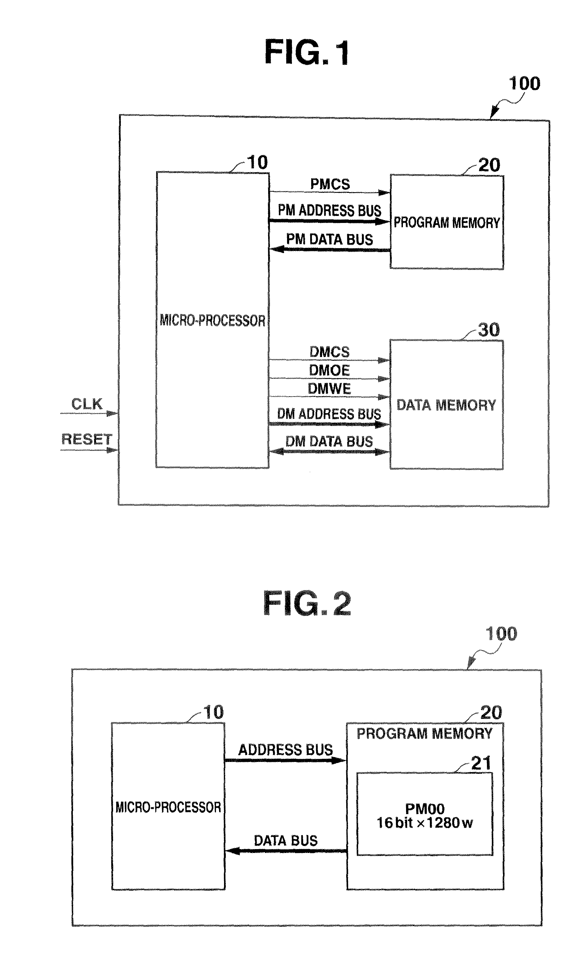

A circuit configuration of the conventional microcomputer is shown in a block diagram of FIG. 1. In the microcomputer 100 shown in FIG. 1, a micro-processor 10 for executing various processes is connected with a program memory 20 with instruction codes stored therein and a data memory 30.

In recent microcomputers, a capacity of the program memory is increasing to store much more instruction codes with enhancement in the functions and performances of equipment for installing the microcomputers. As a result, a problem is caused that more power is consumed in an instruction fetching operation for reading instruction codes from the program memory.

### SUMMARY OF THE INVENTION

The present invention has been made in consideration of the conventional problem, and provides a microcomputer and a storing apparatus which can reduce power consumption in executing instruction codes.

According to one aspect of the invention, there is provided a microcomputer provided with a program storing device for storing instruction codes and a micro-processor for reading and executing the instruction codes stored in the program storing device, wherein the program storing device which comprises plural memories which store instruction codes, an output unit which receives plural pieces of data output from the plural memories, and selects and outputs one of the plural pieces of data received from the plural memories, a selecting unit which receives address data sent from the micro-processor and selects one of the plural memories based on the received address data, an activating unit which activates the memory selected by the selecting unit, and a controlling unit which controls the output unit to output data of the memory activated by the activating unit.

According to another aspect of the invention, there is provided a storing apparatus which comprises plural memories which store data, an output unit which receives plural pieces of data output from the plural memories, and selects and outputs one of the plural pieces of data received from the plural memories, a selecting unit which receives address data and selects one of the plural memories based on the received address data, an activating unit which activates the memory selected by the selecting unit, and a controlling unit which controls the output unit to output data of the memory activated by the activating unit.

### BRIEF DESCRIPTION OF THE DRAWINGS

FIG. 1 is a block diagram showing a circuit configuration of a conventional microcomputer.
FIG. 2 is a block diagram showing a functional circuit configuration of a conventional microcomputer with a program memory which is composed of one large-scale SRAM.
FIG. 3 is a block diagram showing a functional circuit configuration of a microcomputer according to the first embodiment of the invention, provided with a program memory which is composed of 10 small-scale SRAMs.
FIG. 4 is a block diagram showing input and output signals to an address decoder in the microcomputer according to the first embodiment of the invention.
FIG. 5 is a block diagram showing input and output signals to SRAMs in the microcomputer according to the first embodiment of the invention.
FIG. 6 is a block diagram showing input and output signals to a selector in the microcomputer according to the first embodiment of the invention.
FIG. 7 is a timing chart of various signals in the microcomputer according to the first embodiment of the invention.
FIG. 8 is a graph showing a difference in power consumption depending on difference in SRAM configurations of the program memory.
FIG. 9 is a block diagram showing a functional circuit configuration of a microcomputer according to the second embodiment of the invention, provided with a program memory which is composed of 6 small-scale SRAMs and 1 medium-scale SRAM.
FIG. 10 is a graph showing differences in power consumption and circuit space depending on difference in SRAM configurations of the program memory.

### DETAILED DESCRIPTION OF THE PREFERRED EMBODIMENTS

### First Embodiment of the Invention

A micro-processor according to the first embodiment of the invention will be described with reference to the accompanying drawings in detail. In FIG. 2 to FIG. 7, signals and data memories which do not relate to the operation of the micro-processor of the invention will not be described and illustrated.

FIG. 2 is a block diagram showing a functional circuit configuration of a conventional microcomputer 100 with a program memory which is composed of one large-scale SRAM. In FIG. 2, the program memory 20 is composed of one SRAM (PM00) 21 which stores instruction codes of 16 bit x 1280 words. In the circuit configuration, the microprocessor 10 specifies an address in SRAM (PM00) 21 through an address bus, and reads an instruction code stored at the address of SRAM (PM00) 21 through a data bus.

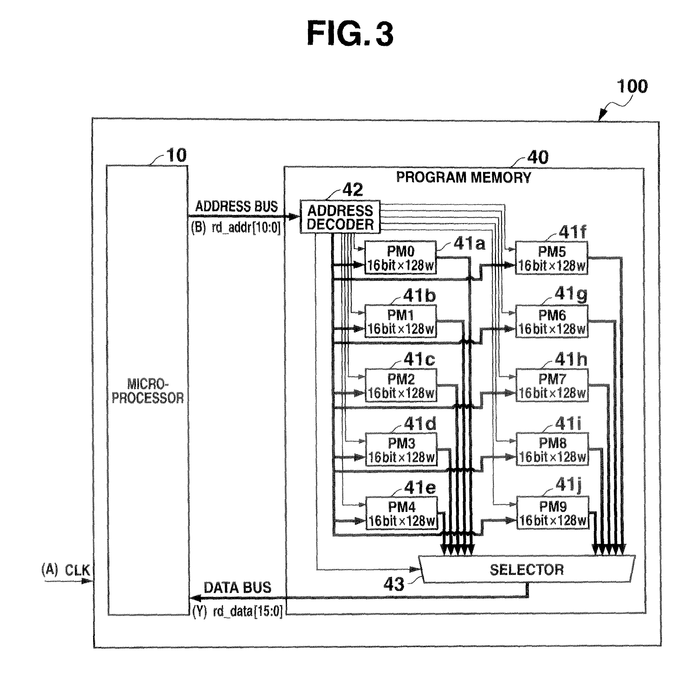

FIG. 3 is a block diagram showing a circuit configuration of a microcomputer 100 according to the first embodiment of the invention. As shown in FIG. 3, a program memory 40 has the same capacity of 16 bits x 1280 words as the program memory 20 shown in FIG. 2, but the program memory 40 is divided into 10 small-scale SRAMs (PM0 to PM9) 41a to 41j, each having 16 bits x 128 words.

In FIG. 3, an address decoder 42 receives an address of rd-addr [10:0] (B) specified by a micro-processor 10 through a address bus, and decodes the upper 4 bits of the entered address rd-addr [10:0] (B) to determine which SRAM should be accessed among the 10 SRAMs (PM0 to PM9) 41a to 41j.

A selector 43 selects data output from SRAM determined to be accessed to supply the micro-processor 10 with instruction codes rd-data [15:0] (Y) which is stored in the accessed SRAM.

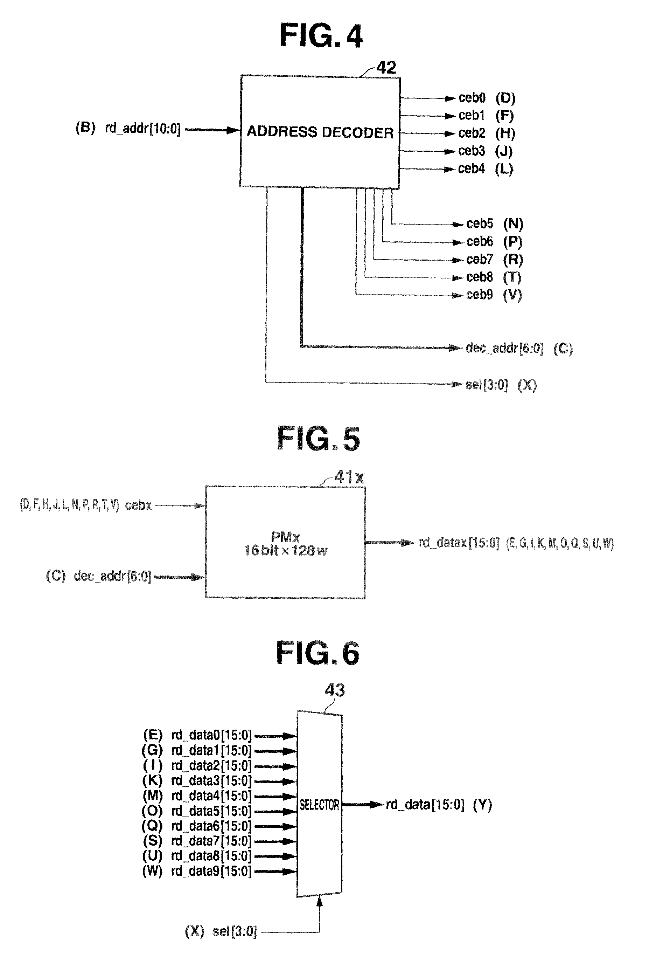

FIG. 4 is a block diagram showing input and output signals to the address decoder 42. In FIG. 4, the address of rd-addr [10:0](B) is of 11 bits and specified by the micro-processor 10. Signals ceb0 to ceb9 (D, F, H, J, L, N, P, R, T, V) are chip-enable signals. The chip-enable signals are for deciding which SRAM should be made enable among the 10 SRAMs (PM0 to PM9) 41a to 41j. Data dec-addr [6:0] (C) corresponds to the lower 7 bits of the entered address rd-addr [10:0](B) of 11 bits, and is supplied to each of the 10 SRAMs (PM0 to PM9) 41a to 41j. A signal sel [3:0](X) is a selecting signal. The selecting signal is for making the selector 43 select a signal output from SRAM which has been made enable.

FIG. 5 is a block diagram showing input and output signals to each of the 10 SRAMs (PM0 to PM9) 41a to 41j. In FIG. 5, data dec-addr [6:0](C) corresponds to the lower 7 bits derived from the address rd-addr [10:0] (B) of 11 bits, specified by the microprocessor 10. The signals cebx (D, F, H, J, L, N, P, R, T, V) are chip-enable signals. Upon receipt of the chip-enable signal of a low level, SRAM is made enable. Data rd-datax [15:0](E, G, I, K, M, O, Q, S, U, W) are instruction codes stored at the addresses specified by the dec-addr [6:0](C).

FIG. 6 is a block diagram showing input and output signals to the selector 43. In FIG. 6, data rd-data0 [15:0] to rd-data9 [15:0] (E, G, I, K, M, O, Q, S, U, W) are instruction codes output respectively from the 10 SRAMs (PM0 to PM9) 41a to 41j. A signal sel [3:0](X) is the selecting signal for selecting a signal output from a selected SRAM. Data rd-data [15:0] (Y) is an instruction code output from one of the 10 SRAMs (PM0 to PM9) 41a to 41j and is the instruction code selected out of the codes rd-data0 [15:0] to rd-data9 [15:0] (E, G, I, K, M, O, Q, S, U, W) by the selecting signal sel [3:0](X).

Hereinafter, the operation of the program memory 40 will be described in detail. In the microcomputer 100 shown in FIG. 3, when the address rd-addr [10:0] (B) of 11 bits is entered to the address decoder 42 from the micro-processor 10 through the address bus, the address rd-addr [10:0](B) of 11 bits is divided into the upper 4 bits and the lower 7 bits. The upper 4 bits are used to determine which SRAM among the 10 SRAMs (PM0 to PM9) 41a to 41j should be accessed. When the upper 4 bits represent "0", the chip-enable signal ceb0 (D) is brought to a Low level, bringing SRAM (PM0) 41a to an enable state, and the chip-enable signals other than the chip-enable signal ceb0 (D) are brought to a High level, bringing SRAMs other than SRAM (PM0) 41a to a disable state. Further, the selecting signal sel [3:0](X) is made to indicate "0" such that the selector 43 selects the signal output from SRAM (PM0) 41a.

When the upper 4 bits represent "1", the chip-enable signal ceb1 (F) is brought to a Low level and the selecting signal sel [3:0](X) is made to indicate "1". When the upper 4 bits represent "2", the chip-enable signal ceb2 (H) is brought to a Low level and the selecting signal sel [3:0](X) is made to indicate "2". .... When the upper 4 bits represent "9", the chip-enable signal ceb9(V) is brought to a Low level and the selecting signal sel [3:0](X) is made to indicate "9".

The address decoder 42 derives the lower 7 bits from the address rd-addr [10:0] (B) of 11 bits, and supplies each of the 10 SRAMs (PM0 to PM9) 41a to 41j with the lower 7 bits as the address data dec-addr [6:0](C) to specify an address of each of the 10 SRAMs (PM0 to PM9) 41a to 41j.

The chip-enable signals cebx(D, F, H, J, L, N, P, R, T, V) of a Low level bring SRAMs in an enable state among the 10 SRAMs (PM0 to PM9) 41a to 41j , and make the SRAMs supply the selector 43 with the instruction codes rd-datax [15:0](E, G, I, K, M, O, Q, S, U, W) stored at the addresses specified by the address data dec-addr [6:0](C).

Now, the selector 43 with the instruction codes rd-datax [15:0](E, G, I, K, M, O, Q, S, U, W) supplied respectively from the 10 SRAMs (PM0 to PM9) 41a to 41j , selects one of said instruction codes rd-datax [15:0] (E, G, I, K, M, O, Q, S, U, W) based on a value of the selecting signal sel [3:0](X), and outputs the selected instruction code rd-datax [15:0](Y) to the data bus.

For example, when the selecting signal sel [3:0](X) indicates "0", the selector 43 selects and outputs the instruction code rd-data0 [15:0](E) as the instruction code rd-data [15:0](Y).

When the selecting signal sel [3:0](X) indicates "1", the selector 43 selects and outputs the instruction code rd-datal [15:0] (G) as the instruction code rd-data [15:0](Y). When the selecting signal sel [3:0](X) indicates "2", the selector 43 selects and outputs the instruction code rd-data2 [15:0](I) as the instruction code rd-data [15:0](Y). .... When the selecting signal sel [3:0](X) indicates "9", the selector 43 selects and outputs the instruction code rd-data9 [15:0](W) as the instruction code rd-data [15:0](Y).

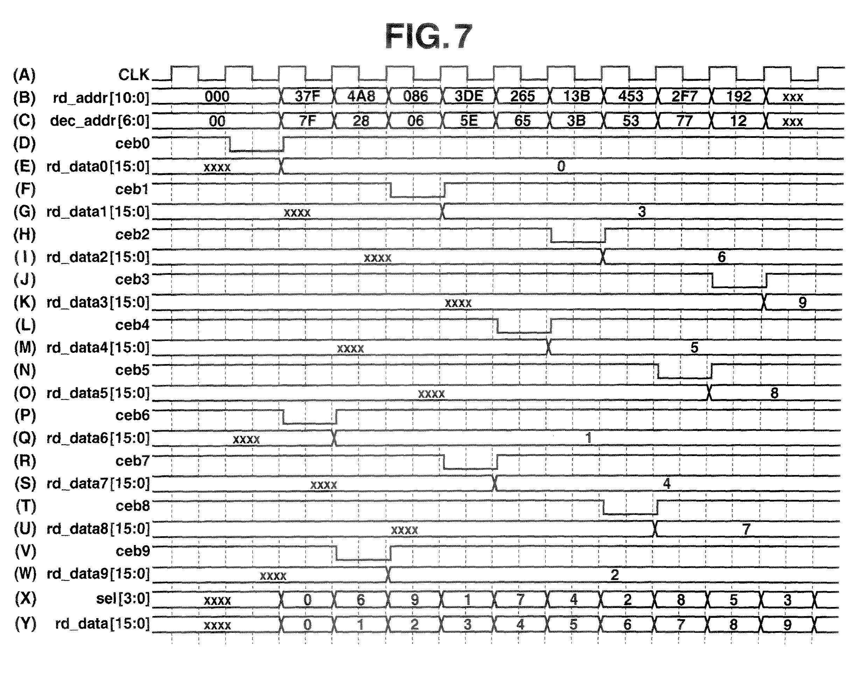

FIG. 7 is a timing chart of various signals in the microcomputer 100. The address rd-addr [10:0](B) of 11 bits is entered from the micro-processor 10 to the address decoder 42 through the address bus in synchronization with a system clock CLK (A) in order of 0x000, 0x37F, 0x4A8, 0x086, 0x3DE, 0x265, 0x13B, 9x453, 0x2F7, and 0x192.

When the address 0x000 is entered to the address decoder 42, the upper 4 bits represent "0", and then, the address decoder 42 brings the chip-enable signal ceb0(D) to a Low level and also brings the chip-enable signals other than ceb0(D) to a High level, and further makes the selecting signal sel [3:0](X) indicate "0". Further, the address decoder 42 outputs the lower 7 bits as the address data dec-addr [6:0](C) of 0x00.

When the address 0x37F is entered to the address decoder 42, the upper 4 bits represent "6", and then, the address decoder 42 brings the chip-enable signal ceb6 (P) to a Low level and also brings the chip-enable signals other than ceb6 (P) to a High level, and further makes the selecting signal sel [3:0](X) indicate "6". Further, the address decoder 42 outputs the lower 7 bits as the address data dec-addr [6:0] (C) of 0x7F.

When the address 0x4A8 is entered to the address decoder 42, the upper 4 bits represent "9" , and then, the address decoder 42 brings the chip-enable signal ceb9(V) to a Low level and also brings the chip-enable signals other than ceb9(V) to a High level, and further makes the selecting signal sel [3:0](X) indicate "9". Further, the address decoder 42 outputs the lower 7 bits as the address data dec-addr [6:0](C) of 0x28.

When the address 0x086 is entered to the address decoder 42, the upper 4 bits represent "1", and then, the address decoder 42 brings the chip-enable signal ceb1(F) to a Low level and also brings the chip-enable signals other than ceb1(F) to a High level, and further makes the selecting signal sel [3:0](X) indicate "1". Further, the address decoder 42 outputs the lower 7 bits as the address data dec-addr [6:0] (C) of 0x06.

When the address 0x3DE is entered to the address decoder 42, the upper 4 bits represent "7", and then, the address decoder 42 brings the chip-enable signal ceb7 (R) to a Low level and also brings the chip-enable signals other than ceb7(R) to a High level, and further makes the selecting signal sel [3:0](X) indicate "7". Further, the address decoder 42 outputs the lower 7 bits as the address data dec-addr [6:0](C) of 0x5E.

When the address 0x265 is entered to the address decoder 42, the upper 4 bits represent "4", and then, the address decoder 42 brings the chip-enable signal ceb4 (L) to a Low level and also brings the chip-enable signals other than ceb4(L) to a High level, and further makes the selecting signal sel [3:0](X) indicate "4". Further, the address decoder 42 outputs the lower 7 bits as the address data dec-addr [6:0] (C) of 0x65.

When the address 0x13B is entered to the address decoder 42, the upper 4 bits represent "2", and then, the address decoder 42 brings the chip-enable signal ceb2 (H) to a Low level and also brings the chip-enable signals other than ceb2(H) to a High level, and further makes the selecting signal sel [3:0](X) indicate "2". Further, the address decoder 42 outputs the lower 7 bits as the address data dec-addr [6:0] (C) of 0x3B.

When the address 0x453 is entered to the address decoder 42, the upper 4 bits represent "8" , and then, the address decoder 42 brings the chip-enable signal ceb8 (T) to a Low level and also brings the chip-enable signals other than ceb8(T) to a High level, and further makes the selecting signal sel [3:0] (X) indicate "8". Further, the address decoder 42 outputs the lower 7 bits as the address data dec-addr [6:0] (C) of 0x53.

When the address 0x2F7 is entered to the address decoder 42, the upper 4 bits represent "5", and then, the address decoder 42 brings the chip-enable signal ceb5(N) to a Low level and also brings the chip-enable signals other than ceb5(N) to a High level, and further makes the selecting signal sel [3:0](X) indicate "5". Further, the address decoder 42 outputs the lower 7 bits as the address data dec-addr [6:0] (C) of 0x77.

When the address 0x192 is entered to the address decoder 42, the upper 4 bits represent "3" , and then, the address decoder 42 brings the chip-enable signal ceb3 (J) to a Low level and also brings the chip-enable signals other than ceb3(J) to a High level, and further makes the selecting signal sel [3:0] (X) indicate "3". Further, the address decoder 42 outputs the lower 7 bits as the address data dec-addr [6:0] (C) of 0x12.

When the address decoder 42 operates in the manner described above, SRAMs (PM0 to PM9) 41a to 41j are successively brought to the enable state in order of SRAM0 (PM0) 41a, SRAM6 (PM6) 41g, SRAM9 (PM9) 41j, SRAM1 (PM1) 41b, SRAM7 (PM7) 41h, SRAM4 (PM4) 41e, SRAM2 (PM2) 41c, SRAM8 (PM8) 41i, SRAM5 (PM5) 41f, and SRAM3 (PM3) 41d, and the address dec-addr [6:0] (C) is changed in a manner as follows: 0x00; 0x7F; 0x28; 0x06; 0x5E; 0x65; 0x3B; 0x53; 0x77; and 0x12, and further, SRAMs output the instruction codes rd-datax [15:0](E, G, I, K, M, O, Q, S, U, W) stored at the respective addresses to the selector 43.

Since the signal selecting signal cel [3:0](X) indicates as follows: 0, 6, 9, 1, 7, 4, 2, 8, 5 and 3, the selector 43 outputs a value "0" of rd-data0 [15:0)(E), a value "1" of rd-data6 [15:0](Q), a value "2" of rd-data9 [15:0] (W), a value "3" of rd-data1[15:0] (G), a value "4" of rd-data7 [15:0] (S), a value "5" of rd-data4 [15:0](M), a value "6" of rd-data2 [15:0](I), a value "7" of rd-data8 [15:0] (U), a value "8" of rd-data5 [15:0](O), and a value "9" of rd-data3 [15:0](K) as the instruction code rd-data [15:0)(Y) to the data bus.

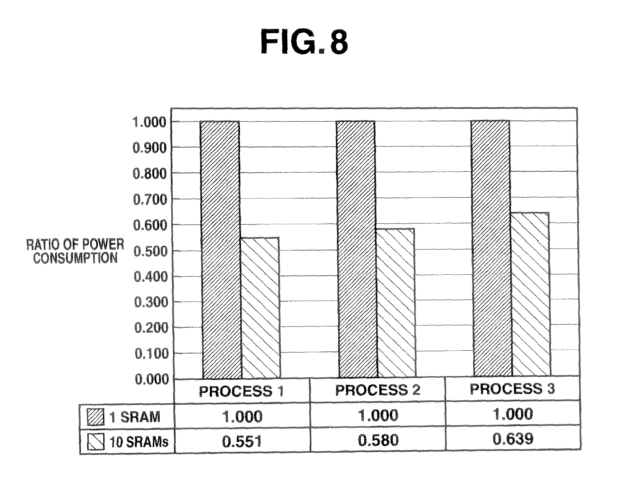

FIG. 8 is a graph showing a difference in power consumption depending on difference in SRAM configurations of the program memory.

The graph shown in FIG. 8 shows ratios of the powers which have been consumed when three different processes are performed by the microcomputers 100 having the program memories different in configuration. When it is assumed that the ratio of the power is set to "1" , which was consumed by the microcomputer 100 having the program memory of one large-scale SRAM, the graph shows the ratios of the powers which the microcomputer 100 having the program memory of 10 small-scale SRAMs consumed while performing three different processes.

As shown in FIG. 8, in the conventional microcomputer 100 having the program memory of one large-scale SRAM, since a reading operation is performed from the large scale SRAM, much power is consumed. On the contrary, in the microcomputer 100 having the program memory of the small-scale SRAMs according to the present invention, since the reading operation is performed from one of the 10 small-scale SRAMs, it will be understood that the power consumption is managed to reduce to 30% to 40% of the conventional microcomputer 100.

### Second Embodiment of the Invention

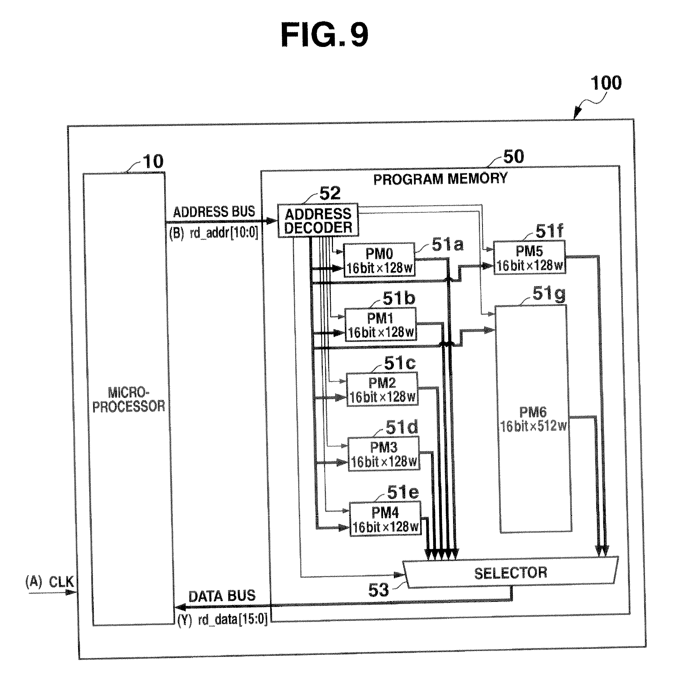

FIG. 9 is a block diagram showing a circuit configuration of the microcomputer 100 according to the second embodiment of the invention. In FIG. 9, a program memory 50 of the microcomputer 100 has a capacity of 16 bits x 1280 words, which is the same as the program memory 20 shown in FIG. 2. The program memory 50 comprises 6 small-scale SRAMs (PM0 to PM5) 51a to 51f and one medium-scale SRAM (PM6) 51g. The 6 small-scale SRAMs each have 16 bits x 128 words and the medium-scale SRAM has 16 bits x 512 words. Operations of an address decoder 52, selector 53, SRAMs (PM0 to PM5) 51a to 51f, and SRAM (PM6) 51g in the program memory 50 are the same as in the program memory 40, and therefore the further description of the operations of these elements will be omitted.

In the program memory 50, it is analyzed how many times each of instruction codes (sub-routines) is used while the program is compiled, and the instruction codes (sub-routines) which are used frequently are stored in SRAMs (PM0 to PM5) 51a to 51f, and the instruction codes (sub-routines) which are not used so often are stored in SRAM (PM6) 51g.

The circuit configuration according to the second embodiment shown in FIG. 9 can reduce the power consumption substantially to the same level as the circuit configuration with 10 small-scale SRAMs according to the first embodiment shown in FIG. 3, and also can be produced with a less circuit space than the program memory of the first embodiment.

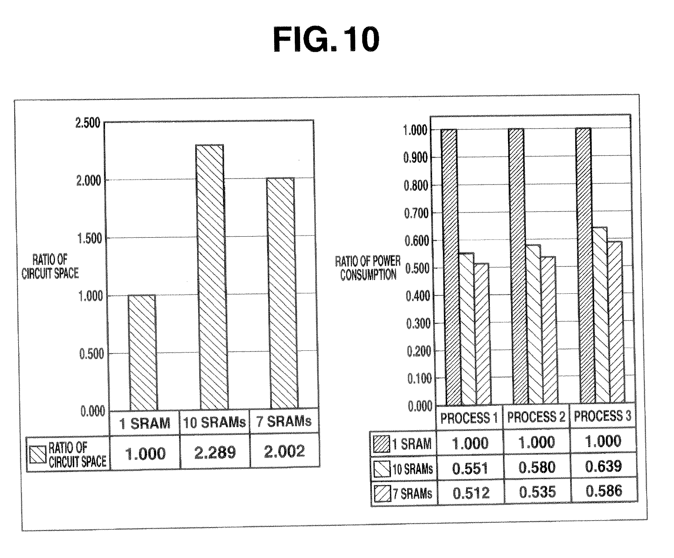

FIG. 10 is a graph showing differences in power consumption and circuit space depending on difference in SRAM configurations of the program memory.

It will be understood from FIG. 10, that the circuit configuration of the second embodiment can reduce the power consumption substantially to the same level as the circuit configuration with 10 small-scale SRAMs of the first embodiment, and also can be produced with a less circuit space than the program memory of the first embodiment.

The micro-processor which is provided with a program memory composed of plural small-scale SRAMs, according to the present invention can manage to consume less power while executing instruction codes than the conventional micro-processor provided with one large-scale SRAM.

Although specific circuit configurations of the invention have been described in the foregoing detailed description, it will be understood that the invention is not limited to the particular circuit configurations described herein, but modifications and rearrangements may be made to the disclosed embodiments while remaining within the scope of the invention as defined by the following claims. It is intended to include all such modifications and rearrangements in the following claims and their equivalents.-

## Claims

1. A microcomputer provided with a program storing device for storing instruction codes and a micro-processor for reading and executing the instruction codes stored in the program storing device, wherein
the program storing device comprises:
plural memories which store instruction codes;
an output unit which receives plural pieces of data output from the plural memories, and selects and outputs one of the plural pieces of data received from the plural memories;
a selecting unit which receives address data sent from the micro-processor and selects one of the plural memories based on the received address data;
an activating unit which activates the memory selected by the selecting unit; and
a controlling unit which controls the output unit to output data of the memory activated by the activating unit.

2. The microcomputer according to claim 1, wherein
the plural memories are composed of SRAMs.

3. The microcomputer according to claim 2, wherein
the plural memories each have the same capacity.

4. The microcomputer according to claim 2, wherein
the plural memories are composed of memories having different capacities.

5. The microcomputer according to claim 2, wherein
the plural memories are composed of a memory having a first capacity and a memory having a second capacity which is at least larger than the first capacity.

6. The microcomputer according to claim 5, wherein
the memory having the first capacity stores an instruction code which is used with higher frequency, and
the memory having the second capacity stores an instruction code which is used with lower frequency.

7. The microcomputer according to claim 1, wherein
the program storing device and the micro-processor are integrated into a single semi-conductor device.

8. A storing apparatus comprising:
plural memories which store data;
an output unit which receives plural pieces of data output from the plural memories, and selects and outputs one of the plural pieces of data received from the plural memories;
a selecting unit which receives address data and selects one of the plural memories based on the received address data;
an activating unit which activates the memory selected by the selecting unit; and
a controlling unit which controls the output unit to output data of the memory activated by the activating unit.

9. The storing apparatus according to claim 8, wherein the plural memories are composed of SRAMs.

10. The storing apparatus according to claim 8, wherein
the plural memories, the output unit, the selecting unit, the activating unit and the controlling unit are integrated into a single semi-conductor device. --
